# EUROPEAN PATENT APPLICATION

(11) **EP 1 958 853 A1**
(43) Date of publication of application: **20.08.2008**
(21) Application number: 08250507.4
(22) Date of filing: 12.02.2008
(51) Int. Cl.: B62D 7/20

(54) **A tie rod arm and method of utilizing the same**

(30) Priority: 16.02.2007 US 707288
(71) Applicant: Dana Heavy Vehicle Systems Group, LLC, Toledo, OH 43615 (US)
(72) Inventor: Moreau, Jeffrey, Lawton, MI 49065 (US); Byrne, Steven T., Portage, MI 49024 (US)
(74) Representative: Cheyne, John Robert Alexander M.

(57) **Abstract**

A symmetrical tie rod arm is disclosed that can be used on either side of a vehicle to eliminate the need for two separate tie rod arms.

## Description

### FIELD OF THE INVENTION

The present invention relates to a tie rod arm and a method of making and utilizing the same.

### BACKGROUND OF THE INVENTION

Tie rods are well-known devices in vehicle steering systems. In such applications, tie rods may be used to connect the steer knuckles together. Thus, when a steering input is provided to one knuckle, the knuckle on the other end of the tie rod is provided the same input.

Various structures may be used to connect the tie rods to the steer knuckles. These structures may be known as tie rod arms. Typically, a tie rod arm for the left hand side of the vehicle is needed and a separate tie rod arm is required for the right hand side of the vehicle as well.

The left hand tie rod arm and the right hand tie rod arm usually have different shapes from one another, thus requiring the left hand tie rod to be forged separately from the right hand tie rod arm. Two separate forgings, the tooling required for them, as well as any subsequent machining required for one or both of the tie rods arms, can be expensive.

Therefore, it would be advantageous to have a single tie rod arm forging that could be used interchangeably with, or readily adapted for, the left and right hand side of the vehicle to eliminate the need for two separate forgings.

### SUMMARY OF THE INVENTION

One embodiment of a tie rod arm forging disclosed herein may have a first end portion having a first fastener aperture boss extending along a first plane. The exemplary tie rod arm forging may also have a second end portion having at least two substantially parallel surfaces oriented in a second plane. The second plane may be transverse to the first plane. The tie rod arm forging may also have a middle portion for connecting the first end portion with the second end portion. The middle portion may have a middle fastener aperture boss extending along the first plane. The tie rod arm forging may be symmetrical about the second plane.

### BRIEF DESCRIPTION OF THE DRAWINGS

The advantages of the present invention will become readily apparent to those skilled in the art from the following detailed description when considered in the light of the accompanying drawings in which:
Fig. 1 is a perspective view of one embodiment of a first tie rod arm;
Fig. 2 is a side view of the first tie rod arm of Fig. 1;
Fig. 3 is a plan view of the first tie rod arm of Fig. 1;
Fig. 4 is a cross-sectional view taken along lines U-U of Fig. 1;
Fig. 5 is a cross-sectional view taken along lines V-V of Fig. 1;
Fig. 6 is a cross-sectional view taken along lines W-W of Fig. 1;
Fig. 7 is a cross-sectional view taken along lines Y-Y of Fig. 1;
Fig. 8 is a cross-sectional view taken along lines Z-Z of Fig. 1;
Fig. 9 is a perspective view of one embodiment of a second tie rod arm;
Fig. 10 is a side view of the second tie rod arm of Fig. 9;
Fig. 11 is a plan view of the second tie rod arm of Fig. 9;
Fig. 12 is a side view of the first tie rod arm attached to one embodiment of a knuckle;
Fig. 13 is a perspective view of one embodiment of a semi-worked tie rod arm forging; and
Fig. 14 is a perspective view of one embodiment of a tie rod arm forging.

### DETAILED DESCRIPTION OF THE PREFERRED EMBODIMENTS

It is to be understood that the invention may assume various alternative orientations and step sequences, except where expressly specified to the contrary. It is also to be understood that the specific devices and processes illustrated in the attached drawings, and described in the following specification are simply exemplary embodiments of the inventive concepts defined in the appended claims. Hence, specific dimensions, directions or other physical characteristics relating to the embodiments disclosed are not to be considered as limiting, unless the claims expressly state otherwise.

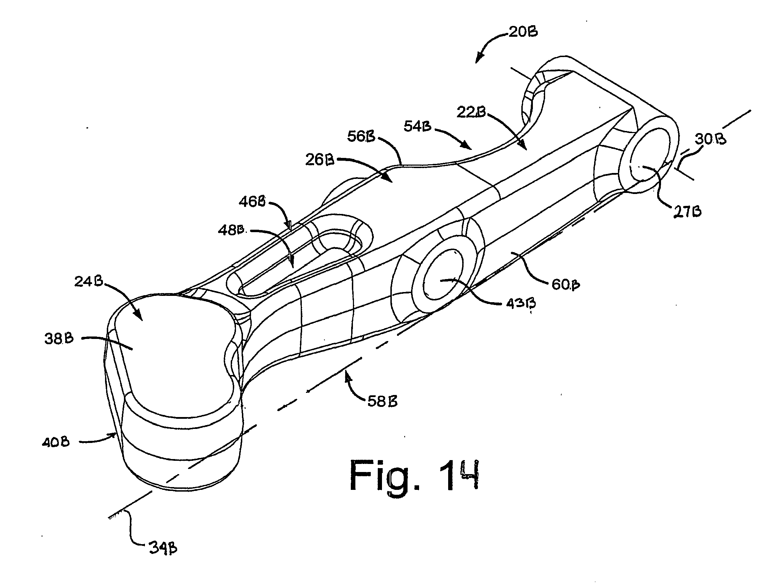

Referring first to Fig. 14, one embodiment of a tie rod arm forging 20B is depicted. The tie rod arm forging 20B may have a first end portion 22B, a second end portion 24B and a middle portion 26B connecting the first end portion 22B to the second end portion 24B. The tie rod arm forging 20B is preferably substantially one-piece and integrally formed. The first end portion 22B may have a first fastener aperture boss 27B extending along a first plane 30B.

The second end portion 24B may have substantially planar upper and lower surfaces 38B, 40B both of which are aligned with a second plane 34B. The second plane 34B is preferably substantially transverse to the first plane 30B. The second end portion 24B may be angled in an outboard direction.

The middle portion 26B has a middle fastener aperture boss 43B extending along the first plane 30B. An upper portion 46B of the middle portion 26B may have a depression 48B therein. Similarly, a lower portion (not shown) of the middle portion 26B may have a similarly shaped and positioned depression (not shown) therein. The depression or depressions save weight without compromising strength.

A first concave portion 54B may be located between the first end portion 22B and the middle portion 26B. The first concave portion 54B may be located on an inboard side 56B of the tie rod arm forging 20B.

A second concave portion 58B may be located between the middle portion 26B and the second end portion 24B. The second concave portion 58B may be located on an outboard side 60B of the tie rod arm forging 20B.

Preferably, the first end portion 22B, the second end portion 24B and the middle portion 26B are all symmetrical about the second plane 34B.

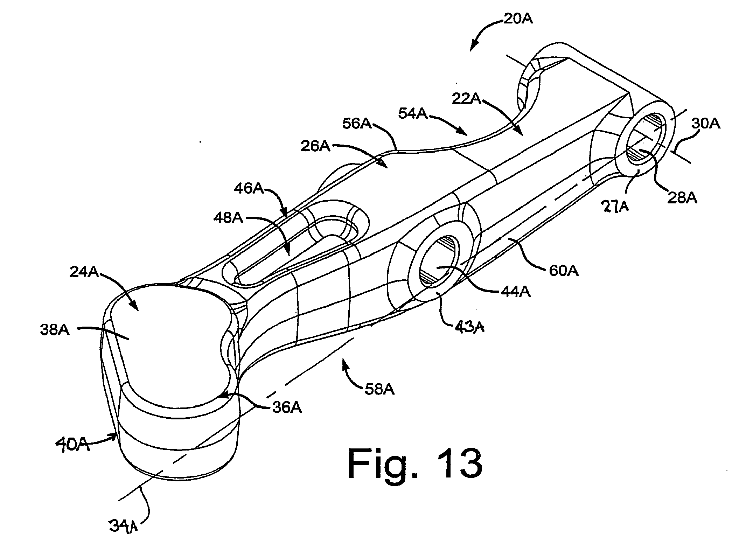

Referring now to Fig. 13, one embodiment of a semi-worked tie rod arm forging 20A is depicted. As can be appreciated from the information below, the semi-machined tie rod arm forging 20A is the tie rod arm forging 20B but with additional features.

The tie rod arm forging 20A may have a first end portion 22A, a second end portion 24A and a middle portion 26A connecting the first end portion 22A to the second end portion 24A. The first end portion 22A may have a first fastener aperture 28A extending through a first fastener aperture boss 27A in a first plane 30A. The first fastener aperture 28A may be machined into the boss 27A in a manner known by those skilled in the art.

The second end portion 24A may have substantially planar upper and lower surfaces 38A, 40A both of which are aligned with a second plane 34A. The second plane 34A is preferably substantially transverse to the first plane 30A. The second end portion 24A may be angled in an outboard direction.

The middle portion 26A has a middle fastener aperture 44A extending through a middle fastener aperture boss 43A along the first plane 30A. The middle fastener aperture 44A may be machined into the boss in a manner known by those skilled in the art. An upper portion 46A of the middle portion 26A may have a depression 48A therein. Similarly, a lower portion (not shown) of the middle portion 26A may have a similarly shaped and positioned depression (not shown) therein. The depression or depressions save weight without compromising strength.

A first concave portion 54A may be located between the first end portion 22A and the middle portion 26A. The first concave portion 54A may be located on an inboard side 56A of the tie rod arm forging 20A.

A second concave portion 58A may be located between the middle portion 26A and the second end portion 24A. The second concave portion 58A may be located on an outboard side 60A of the tie rod arm 20A.

Preferably, the first end portion 22A, the second end portion 24A and the middle portion 26A are all symmetrical about the second plane 34A.

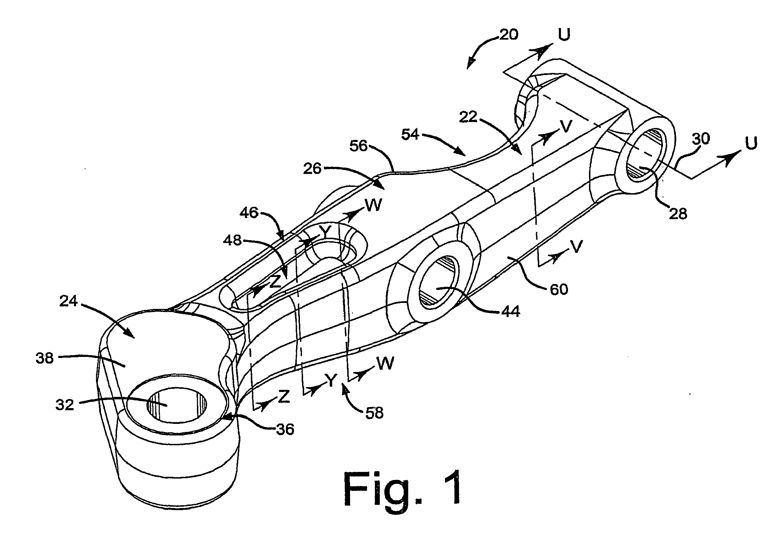

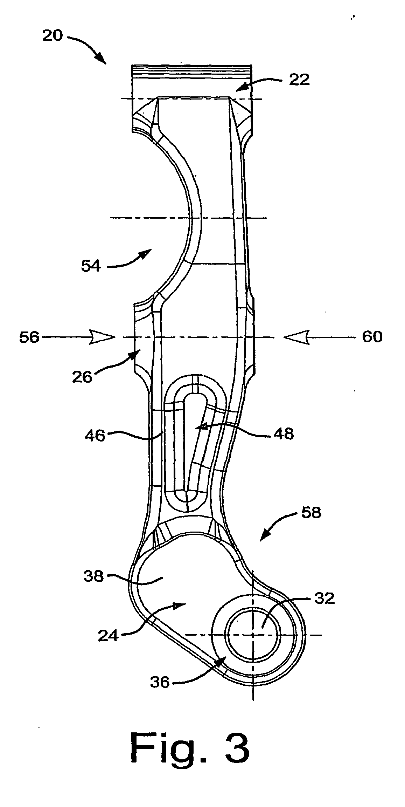

Turning now to Figs. 1-3, one embodiment of a first tie rod arm 20 is depicted. As will be appreciated from the following, the first tie rod arm 20 can be created from the tie rod arm forging 20A.

The first tie rod arm 20 may have a first end portion 22, a second end portion 24 and a middle portion 26 connecting the first end portion 22 to the second end portion 24. The first end portion 22 may have a first fastener aperture 28 extending therethrough in a first plane 30. The first plane 30 is best seen in Fig. 1.

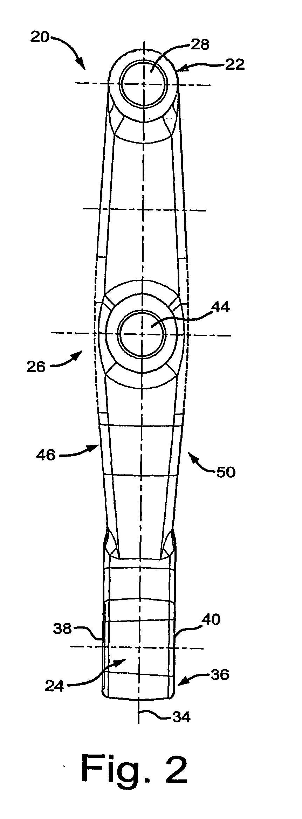

The second end portion 24 may have an aperture 32 extending therethrough in a second plane 34. The second plane is best seen in Fig. 2. The aperture 32 may be located in an outboard portion 36 of the second end portion 24. The second plane 34 is preferably substantially transverse to the first plane 30. The second end portion 24 may have substantially planar upper and lower surfaces 38, 40 in which the aperture 32 is located. The second end portion 24 may be angled in an outboard direction.

In one embodiment, the aperture 32 is tapered. By way of example only, the aperture 32 may taper down from the lower surface 40 of the second end portion 24 to the upper surface 38 of the second end portion 24. The tapered aperture 32 may be created by, for example, machining.

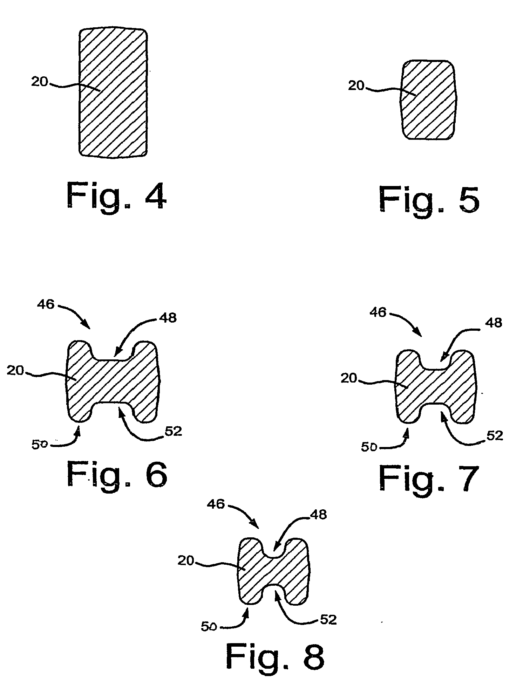

The middle portion 26 has a middle fastener aperture 44 extending therethrough along the first plane 30. An upper portion 46 of the middle portion 26 may have a depression 48 therein. Similarly, a lower portion 50 of the middle portion 26 may have a similarly shaped and positioned depression 52 therein. The depressions 48, 52 in the upper and lower portions 46, 50 of the middle portion 26 can be seen in Figs. 6-8. The depression or depressions save weight and without compromising strength. From these same figures, it can be appreciated that some of the middle portion 26 may have an H-shaped cross-section. It can also be appreciated from the cross-sectional views of Figs. 4-8 that the first tie rod arm 20 is preferably substantially one-piece and integrally formed.

A first concave portion 54 may be located between the first end portion 22 and the middle portion 26. The first concave portion 54 may be located on an inboard side 56 of the first tie rod arm 20.

A second concave portion 58 may be located between the middle portion 26 and the second end portion 24. The second concave portion 58 may be located on an outboard side 60 of the first tie rod arm 20.

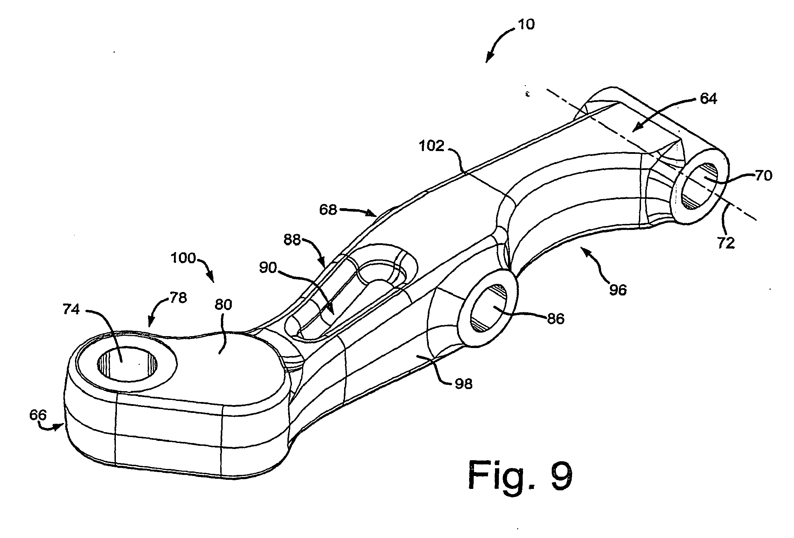

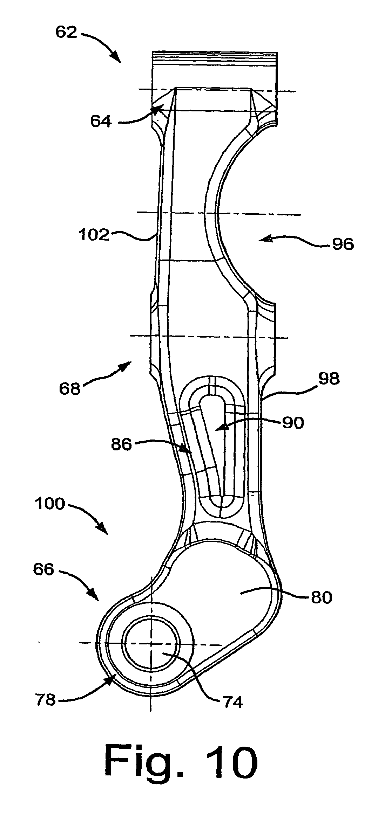

Referring now to Figs. 9-11, one embodiment of a second tie rod arm 62 is depicted. As will be appreciated from the following, the second tie rod arm 62 can be created from the tie rod arm forging 20A. It can also be appreciated that the second tie rod 62 is simply the first tie rod 20 flipped over, thus the two arms 20, 62 have substantially identical features as will be made obvious by the description below.

The second tie rod arm 62 may have a first end portion 64, a second end portion 66 and a middle portion 68 connecting the first end portion 64 to the second end portion 66. The first end portion 64 may have a first fastener aperture 70 extending therethrough in a first plane 72. The first plane 72 is best seen in Fig. 9.

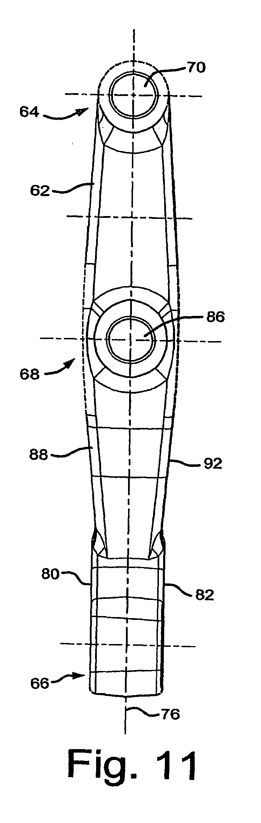

The second end portion 66 may have an aperture 74 extending therethrough in a second plane 76. The second plane is best seen in Fig. 11. The aperture 74 may be located in an outboard portion 78 of the second end portion 66. The second plane 76 is preferably substantially transverse to the first plane 72. The second end portion 66 may have substantially planar upper and lower surfaces 80, 82 in which the aperture 74 is located. The second end portion 66 may be angled in the outboard direction.

In one embodiment, the aperture 74 is tapered. By way of example only, the aperture 74 may taper down from the upper surface 80 of the second end portion 66 to the upper surface 80 of the second end portion 66. The tapered aperture 74 may be created by, for example, machining.

The middle portion 68 has a middle fastener aperture 86 extending therethrough along the first plane 72. An upper portion 88 of the middle portion 68 may have a depression 90 therein. Similarly, a lower portion 92 of the middle portion 68 may have a similarly shaped and positioned depression (not shown) therein. The cross-sectional shape of the arm 62 may be similar to or identical to the shapes depicted in Figs. 4-8. The depression or depressions reduce the weight of the arm 62 without compromising strength.

A first concave portion 96 may be located between the first end portion 64 and the middle portion 68. The first concave portion 96 may be located on an inboard side 98 of the second tie rod arm 62.

A second concave portion 100 may be located between the middle portion 68 and the second end portion 66. The second concave portion 100 may be located on an outboard side 102 of the second tie rod arm 62.

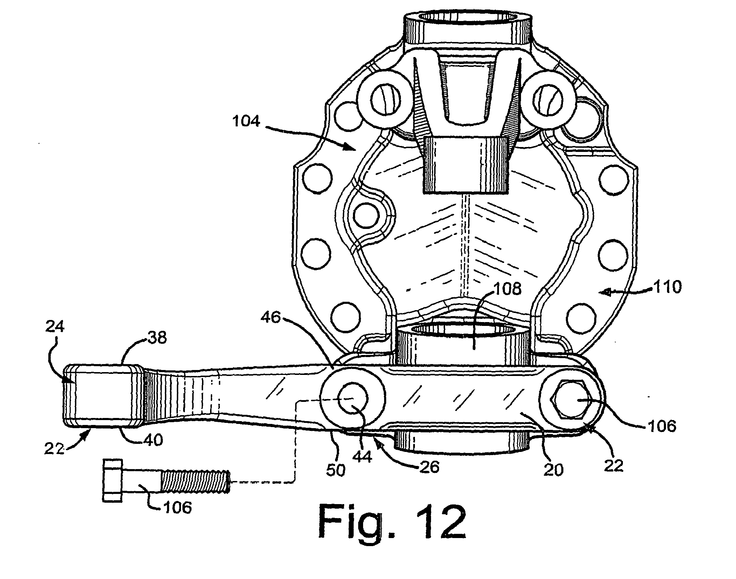

Fig. 12 depicts the first tie rod arm 20 attached to one embodiment of a knuckle 104. Mechanical fasteners, such as bolts 106, are located through the first fastener aperture 28 and the middle fastener aperture 44 to be secured into, or with, respective apertures (not shown) in the knuckle 104. Fig. 12 depicts a bolt 106 in the first fastener aperture 28, and another bolt 106 about to be located in the middle fastener aperture 44 as an example. The first concave portion 54 of the first tie rod 20 preferably has a complementary shape a king pin boss 108 located in a lower portion 110 of the knuckle 104. For example, the king pin boss 108 may have an outer convex shape. The middle portion 26 and the second end portion 24 of the first tie rod arm 20 extend away from the knuckle.

A tie rod (not shown) may be connected by mechanical type fasteners to the tie rod arm 20 through the aperture 32 in the second end portion 24.

It can be appreciated that the second tie rod arm 62 can be similarly attached between the other end of the tie rod and a second knuckle.

It can further be appreciated that the symmetrical nature of the tie rod arm forging 20A described herein permits it to be utilized on both sides of the vehicle without the need for two different tie rod arms forgings.

In accordance with the provisions of the patent statutes, the present invention has been described in what is considered to represent its preferred embodiments. However, it should be noted that the invention can be practiced otherwise than as specifically illustrated and described without departing from its spirit or scope.

## Claims

1. A tie rod arm forging, comprising:
a first end portion having a first fastener aperture boss extending along a first plane;
a second end portion having two substantially parallel surfaces oriented in a second plane, said second plane being substantially transverse to said first plane; and
a middle portion for connecting said first end portion with said second end portion, said middle portion having a middle fastener aperture boss extending along said first plane,
wherein said first end portion, said second end portion, and said middle portion are symmetrical about said second plane.

2. The tie rod arm forging of claim 1, wherein said first end portion and said middle portion define a concave inboard portion.

3. The tie rod arm forging of claim 1, wherein said middle portion and said second end portion define a concave outboard portion.

4. The tie rod arm forging of claim 1, wherein said first end portion, said second end portion and said middle portion are all integrally formed, 1 piece and solid.

5. The tie rod arm of claim 1, wherein said first end portion and said second end portion are at radially opposite ends on said forging.

6. The tie rod arm of claim 1, wherein said second end portion has a substantially planar upper surface and a substantially planar lower surface.

7. The tie rod arm of claim 1, wherein said second end portion extends in an outboard direction.

8. A semi-worked tie rod arm forging, comprising;
a tie rod arm having a first end portion, a second end portion and a middle portion connecting said first end portion with said second end portion, said first end portion having a first fastener aperture extending therethrough in a first plane, said second end portion having an outboard portion having an aperture extending therethrough in a second plane, said second plane being transverse to said first plane and said middle portion having an aperture extending therethrough along said first plane.

9. The tie rod arm forging of claim 8, wherein said second end portion extends in an outboard direction.

10. The tie rod arm forging of claim 8, wherein said first end portion, said second end portion and said middle portion are all integrally formed and one-piece.

11. The tie rod arm forging of claim 8, wherein said middle portion and said first end portion define a concave inboard portion.

12. The tie rod arm forging of claim 8, wherein said middle portion and said second end portion define a concave outboard portion.

13. The tie rod arm forging of claim 8, wherein said tie rod arm forging is symmetrical about said second plane.

14. The tie rod arm forging of claim 8, wherein said aperture in said second end portion is tapered.

15. A method of making a tie rod arm, comprising:
providing a tie rod arm forging having a first end portion, a second end portion and a middle portion connecting said first end portion with said second end portion, where said first end portion and said middle portion have forged apertures bosses aligned along a first plane and said second end portion has two substantially planar surfaces;
defining a second plane in said forging, said second plane being substantially transverse to said first plane, wherein said forging is initially substantially symmetrical about said second plane;
machining apertures in said boss of said first end portion and in said boss of said second end portion along said first plane; and
machining an aperture in said second end portion to connect said two substantially planar surfaces in said second plane.

16. The method of claim 15, wherein said aperture along said second plane is machined with a taper, the direction of said taper determining whether said forging will become a right hand tie rod or a left hand tie rod.

17. The method of claim 15, wherein said forging is one-piece and integrally formed.

18. The method of claim 15, wherein said substantially planar surfaces connected by said second aperture comprise an upper surface and a lower surface of said forging.

19. The method of claim 15, wherein said arm is forged with at least a portion of said middle portion having an H-shaped cross-section.

20. The method of claim 15, wherein said aperture in said second end portion is machined in an outboard portion of said second end portion.
